# EUROPEAN PATENT APPLICATION

(11) **EP 4 471 278 A1**
(43) Date of publication of application: **04.12.2024**
(21) Application number: 22923677.3
(22) Date of filing: 30.12.2022
(51) Int. Cl.: F15B 13/02, F15B 19/00, F15B 3/00, G01L 25/00

(54) **LIQUID PRESSURE CALIBRATION APPARATUS**

(30) Priority: 30.01.2022 CN 202210114567; 30.01.2022 CN 202210114571
(71) Applicant: Beijing Const Instruments Technology Inc., Beijing 100094 (CN)
(72) Inventor: GAO, Hongjun, Beijing 100094 (CN); DONG, Fengshan, Beijing 100094 (CN); LIU, Qing, Beijing 100094 (CN); SU, Xinan, Beijing 100094 (CN); ZHANG, Chunying, Beijing 100094 (CN); JI, Wei, Beijing 100094 (CN); WANG, Gang, Beijing 100094 (CN); CAI, Xiaoxia, Beijing 100094 (CN); JIANG, Xiaohui, Beijing 100094 (CN); WAN, Chunhui, Beijing 100094 (CN)
(74) Representative: Algemeen Octrooi- en Merkenbureau B.V.
(86) International application number: PCT/CN2022/144152
(87) International publication number: WO 2023/142892

(57) **Abstract**

A liquid pressure calibration apparatus is disclosed, wherein a first liquid path (200) and a second liquid path (300) with different pressure output ranges are arranged in parallel between a liquid pressure inlet port (A) and a liquid pressure output port (B) of the liquid pressure calibration apparatus, and the pressure output range of the first liquid path (200) is continuous with the pressure output range of the second liquid path (300). A target pressure to be output is compared with a switching pressure, and the first liquid path (200) or the second liquid path (300) is selected to supply pressure to the liquid pressure output port (B) based on the comparison result, and the target pressure is output.

## Description

The present application claims the priorities of the Chinese patent application number 202210114571.2, filed with the Chinese Patent Office on January 30, 2022 and entitled "Liquid Pressure Control Method for Liquid Pressure Calibration Apparatus", and the Chinese patent application number 202210114567.6, filed with the Chinese Patent Office on January 30, 2022 and entitled "Liquid Pressure Calibration Apparatus", the entire contents of which are incorporated by reference in this application.

### FIELD OF THE INVENTION

The invention relates to the field of liquid pressure control, and in particular to a liquid pressure calibration apparatus.

### BACKGROUND OF THE INVENTION

Pressure gauges, pressure transmitters, pressure switches and other pressure instruments used in industrial production, pressure measurement and other fields need to be regularly calibrated (e.g., verified and calibrated) to ensure the accuracy of the pressure detected by the pressure instruments. It is inconvenient to carry a large number of pressure instruments on industrial sites to the laboratory for calibration. One calibration method is to carry a pressure test device to the site to calibrate the pressure instrument.

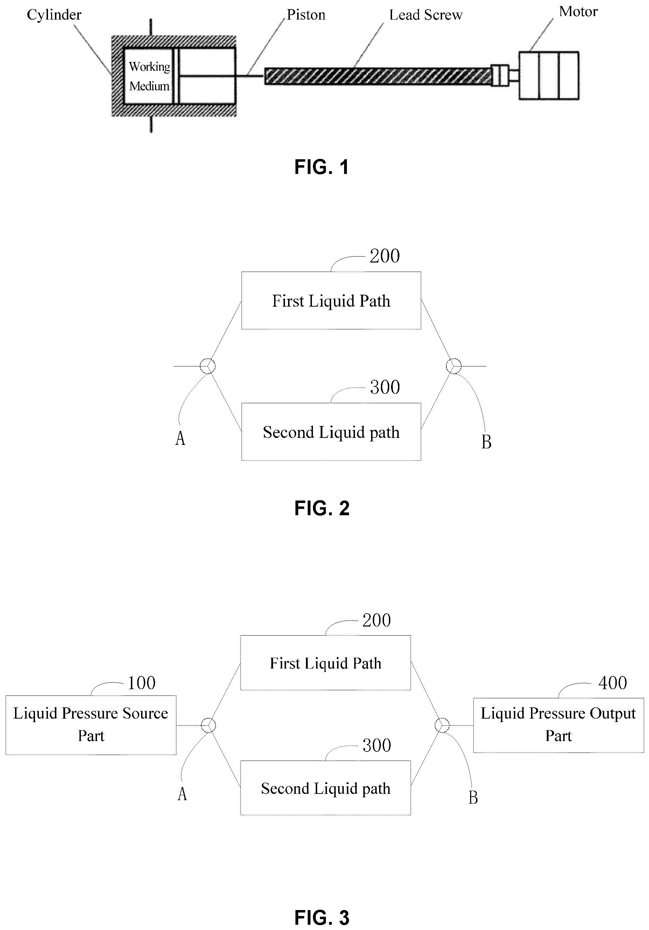

The electric liquid pressure calibration apparatus is a device for calibrating pressure instruments, which uses a motor as a driving source and can be used to calibrate pressure instruments on site. The main structure of the electric liquid pressure calibration apparatus is shown in FIG. 1, including a cylinder with a piston inside, the piston being connected to a lead screw, and the lead screw being connected to a motor shaft. When the electric liquid pressure calibration apparatus is working, the motor shaft rotates to drive the lead screw to rotate, and the rotation of the lead screw drives the piston to move left and right to change the pressure of the liquid in the cylinder, thereby completing the control of the output liquid pressure.

In the process of using the electric liquid pressure calibration apparatus for liquid pressure control, for scenarios with higher liquid pressure requirements or when calibrating high-pressure pressure instruments, in order to provide higher liquid pressure, the electric liquid pressure calibration apparatus shown in FIG. 1 needs to be provided with a larger pressure chamber and a longer screw, and needs to be equipped with a higher power motor, which results in the electric liquid pressure calibration apparatus itself being larger in size, which is not conducive to movement and transportation, and is likely to cause inconvenience to users in movement and transportation scenarios..

### SUMMARY OF THE INVENTION

An embodiment of the present invention provides a liquid pressure calibration apparatus, which can improve the portability of the liquid pressure calibration apparatus.

The embodiment of the present invention adopts the following technical solution:
a liquid pressure calibration apparatus, comprising
a liquid pressure inlet port for introducing pressurized liquid;
a liquid pressure output port for outputting pressurized liquid;
a first liquid path having an input end and an output end, wherein the input end of the first liquid path is connected to the liquid pressure inlet port, and the output end of the first liquid path is connected to the liquid pressure outlet port;
a second liquid path having an input end and an output end and arranged in parallel with the first liquid path, wherein the input end of the second liquid path is connected to the liquid pressure inlet port, and the output end of the second liquid path is connected to the liquid pressure outlet port;
a controller, configured to perform:
determining a target pressure that the apparatus needs to output; and
comparing the target pressure with a pre-stored switching pressure, and selectively controlling the first liquid path or the second liquid path to supply pressure to the liquid pressure output port based on a comparison result; wherein a pressure output range of the first liquid path is continuous with a pressure output range of the second liquid path.

In a possible implementation, the step of comparing the target pressure with the pre-stored switching pressure and selectively controlling the first liquid path or the second liquid path to supply pressure to the fluid pressure output port based on the comparison result includes:
supplying pressure by the first liquid path if the target pressure value is greater than the switching pressure; and supplying pressure by the second liquid path if the target pressure value is less than or equal to the switching pressure.

In a possible implementation, the controller is configured to execute:
obtaining a current pressure of the liquid pressure output port;
the step of supplying pressure by the first liquid path if the target pressure value is greater than the switching pressure, and supplying pressure by the second liquid path if the target pressure value is less than or equal to the switching pressure, includes:
switching the first liquid path and the second liquid path when the switching pressure is reached, if the switching pressure is between the current pressure and the target pressure, and supplying pressure to the liquid pressure output port by the switched liquid path; and
supplying pressure to the fluid pressure output port by the current liquid path, if the switching pressure is not between the current pressure and the target pressure.

In a possible implementation, the pressure supply starting point of the switched liquid path is the switching pressure.

In a possible implementation, the step of switching the first liquid path and the second liquid path when the switching pressure is reached, if the switching pressure is between the current pressure and the target pressure, and supplying pressure to the liquid pressure output port by the switched liquid path, includes:
reducing the pressure to the switching pressure by pressure supply of the first liquid path, if the current pressure is greater than the switching pressure, and then outputting the target pressure by pressure supply of the second liquid path; and
increasing the pressure to the switching pressure by pressure supply of the second liquid path, if the current pressure is lower than the switching pressure, and then outputting the target pressure by pressure supply of the first liquid path.

In a possible implementation, the pressure output range of the first liquid path and the pressure output range of the second liquid path are continuous at the switching pressure.

In a possible implementation, the maximum output pressure in the pressure output range of the first liquid path is greater than the maximum output pressure in the pressure output range of the second liquid path, and the minimum output pressure in the pressure output range of the first liquid path is greater than the minimum output pressure in the pressure output range of the second liquid path.

In a possible embodiment, a supercharger is provided on the first liquid path, and the supercharger includes a first compression chamber and a second compression chamber. The first compression chamber and the second compression chamber are configured such that the first compression chamber and the second compression chamber are filled with liquid medium, and when the pressure of the liquid medium in the first compression chamber changes by ΔP, the pressure of the liquid medium in the second compression chamber changes by N times ΔP, where N is greater than 1.

In a possible implementation, the liquid medium in the first compression chamber is isolated from the liquid medium in the second compression chamber, the first compression chamber is connected to the liquid pressure inlet port, and the second compression chamber is connected to the liquid pressure outlet port.
In a possible implementation, the cross-sectional area of the first compression chamber is M times the cross-sectional area of the second compression chamber;
a first piston is disposed in the first compression chamber, and the pressure of the liquid in the first compression chamber is controlled by controlling the position of the first piston; and
a second piston is disposed in the second compression chamber, and the pressure of the liquid in the second compression chamber is controlled by controlling the position of the second piston.

In a possible implementation, when the second liquid path supplies pressure to the liquid pressure output port, the second liquid path is communicated with the second compression chamber, so that the second liquid path outputs liquid to push the second piston to move to increase the volume of the second compression chamber.

In a possible implementation, the first piston and the second piston move synchronously.

In a possible implementation, the M is equal to the N.

In a possible implementation, the apparatus further includes an electrically driven liquid pressure source, wherein an output end of the electrically driven liquid pressure source is connected to the liquid pressure inlet port; and
the first liquid path and the second liquid path share the electrically driven fluid pressure source.

In a possible implementation, the liquid pressure output by the first liquid path is greater than the liquid pressure output by the output end of the electrically driven liquid pressure source; and
the liquid pressure output by the second liquid path is less than or equal to the liquid pressure output by the output end of the electrically driven liquid pressure source.

The liquid pressure calibration apparatus provided by the above technical solution has a first liquid path and a second liquid path with different pressure output ranges arranged in parallel between the liquid pressure inlet port and the liquid pressure output port of the liquid pressure calibration apparatus. The pressure output range of the first liquid path is continuous with the pressure output range of the second liquid path. The target pressure to be output is compared with the switching pressure, and the first liquid path or the second liquid path is selected as the liquid pressure output port to supply pressure and output the target pressure according to the comparison result, so that pressure is supplied based on the two parallel liquid paths with different pressure ranges. The pressure supply liquid path is determined according to the output target pressure, so as to avoid the problem of a single liquid path providing a full range of liquid pressure and a large volume caused by a large piston cavity and a long lead screw. The liquid pressure can be output on demand within the limited volume of the liquid pressure calibration apparatus, thereby improving the portability of the liquid pressure calibration apparatus.

It is to be understood that the foregoing general description and the following detailed description are exemplary and explanatory only and are not restrictive of the present disclosure.

### BRIEF DESCRIPTION OF THE DRAWINGS

FIG. 1 is a structural diagram of an existing liquid pressure calibration apparatus;
FIG. 2 is a structural diagram of a liquid pressure calibration apparatus according to an embodiment of the present invention;
FIG. 3 is a second structural diagram of a liquid pressure calibration apparatus provided in an embodiment of the present invention;
FIG. 4 is a third structural diagram of a liquid pressure calibration apparatus provided in an embodiment of the present invention;
FIG. 5 is a structural diagram of a supercharger in a liquid pressure calibration apparatus provided in an embodiment of the present invention;
FIG. 6 is a fourth structural diagram of the liquid pressure calibration apparatus provided in an embodiment of the present invention;
FIG. 7 is a fifth structural diagram of a liquid pressure calibration apparatus provided in an embodiment of the present invention;
FIG. 8 is a sixth structural diagram of a liquid pressure calibration apparatus provided in an embodiment of the present invention;
FIG. 9 is a structural diagram of an electrically driven liquid pressure source provided in an embodiment of the present invention;
FIG. 10 is a second structural diagram of the electrically driven liquid pressure source provided in an embodiment of the present invention.

### DETAILED DESCRIPTION OF THE EMBODIMENTS

Exemplary embodiments will be described in detail herein, examples of which are shown in the accompanying drawings. When the following description refers to the drawings, the same numbers in different drawings represent the same or similar elements unless otherwise indicated. The embodiments described in the following exemplary embodiments do not represent all embodiments consistent with the present invention. Instead, they are merely examples of apparatuses and methods consistent with some aspects of the present invention as detailed in the appended claims.

The "first" mentioned in the embodiments of the present application is only used as a name identifier and does not mean the first in order, and the same rule applies to "second" etc. Unless otherwise specified, "first" and "second" in the text refer to different things, for example, the first liquid path and the second liquid path are different liquid paths.

In the embodiment of the present invention, the pressure instrument may be an instrument with a pressure measurement function, such as a pressure gauge, a pressure transmitter, or a pressure switch etc.

An embodiment of the present invention provides a liquid pressure calibration apparatus, which can be used for calibrating the pressure instrument. The calibration process is as follows: the pressure instrument to be calibrated and a standard meter with higher accuracy are connected to the liquid pressure calibration apparatus, and the liquid pressure calibration apparatus simultaneously supplies pressure to the pressure instrument to be calibrated and the standard meter to ensure that the pressure instrument to be calibrated and the standard meter measure the same pressure, and compares the measured value of the pressure instrument to be calibrated with the measured value of the standard meter, so as to determine whether the accuracy of the pressure instrument to be calibrated meets the requirements.

As shown in FIG. 2, the liquid pressure calibration apparatus according to an embodiment of the present invention comprises:
a liquid pressure inlet port A for introducing pressure liquid, and a liquid pressure output port B for outputting pressure liquid; a first liquid path 200 having an input end and an output end, wherein the input end of the first liquid path 200 is connected to the liquid pressure inlet port, and the output end of the first liquid path 200 is connected to the liquid pressure output port; a second liquid path 300 having an input end and an output end arranged in parallel with the first liquid path 200, wherein the input end of the second liquid path 300 is connected to the liquid pressure inlet port, and the output end of the second liquid path 300 is connected to the liquid pressure output port.

When the liquid pressure calibration apparatus has a built-in pressure source such as a liquid pressure pump, the liquid pressure inlet port is connected to the liquid output pipeline of the pressure source. When the liquid pressure calibration apparatus has an external pressure source such as a liquid pressure pump, the liquid pressure inlet port can be set on the housing of the liquid pressure calibration apparatus for an external pressure source. The liquid pressure output port outputs liquid pressure for pressure calibration of the instrument to be calibrated. The first liquid path 200 and the second liquid path 300 are arranged in parallel. After the liquid pressure is introduced from the liquid pressure inlet port, it is divided into two paths, namely the first liquid path 200 and the second liquid path 300. The first liquid path 200 and the second liquid path 300 control the liquid pressure and the pressurized liquid is finally output from the liquid pressure output port. At the same time, one of the first liquid path 200 and the second liquid path 300 outputs liquid pressure to the liquid pressure output port for use in calibrating the pressure instrument.

The pressure output range of the first liquid path 200 and the pressure output range of the second liquid path 300 are continuous and at least partially nonoverlapping, and some pressure points in the pressure output range of the first liquid path 200 overlap with some pressure points in the pressure output range of the second liquid path 300.

The liquid pressure calibration apparatus of the embodiment of the present invention further includes: the controller, which may be a module with control function such as a processing module or a processor provided in the liquid pressure calibration apparatus, and the controller is configured to execute:
determining the target pressure that the apparatus needs to output, comparing the target pressure with the pre-stored switching pressure, and selectively controlling the first liquid path 200 or the second liquid path 300 to supply pressure to the liquid pressure output port based on the comparison result; wherein the pressure output range of the first liquid path 200 is continuous with the pressure output range of the second liquid path 300.

According to different application scenarios, the target pressure may be determined according to user input, or may be determined according to the instrument being calibrated. The embodiment of the present invention does not limit the method for determining the target pressure.

For example, the target pressure input by the user is received by setting a keyboard or an input box on the touch screen of the liquid pressure calibration apparatus. Specifically, a pressure output task is received, and the pressure output task includes multiple pressure points to be output, and each pressure point to be output can be implemented by referring to the control method of the target pressure point.

For another example, when the target pressure is determined according to the instrument to be calibrated, if the pressure instrument to be calibrated needs to be calibrated at multiple different pressure points, the pressure control method of each pressure point can be implemented by referring to the control method of the target pressure point.

The first liquid path 200 and the second liquid path 300 are switched at the switching pressure. According to the pressure output requirement, the specific switching manner can be that the first liquid path 200 is switched to the second liquid path 300 or that the second liquid path 300 is switched to the first liquid path 200. The connecting pressure point of the pressure output range of the first liquid path 200 and the pressure output range of the second liquid path 300 is the switching pressure. Except for the switching pressure, the pressure points included in the pressure output range of the first liquid path 200 are greater than the pressure points included in the pressure output range of the second liquid path 300. The maximum output pressure in the pressure output range of the first liquid path 200 is greater than the maximum output pressure in the pressure output range of the second liquid path 300; and the minimum output pressure in the pressure output range of the first liquid path 200 is greater than the minimum output pressure in the pressure output range of the second liquid path 300.

Both the first liquid path 200 and the second liquid path 300 can output the switching pressure. The maximum output pressure in the pressure output range of the second liquid path 300 is the switching pressure, and the minimum output pressure in the pressure output range of the first liquid path 200 is the switching pressure. All output points except the switching pressure in the pressure output range of the first liquid path 200 are greater than the pressure output points in the second pressure range. The upper limit of the pressure output range of the second liquid path is the switching pressure, and the lower limit of the pressure output range of the first liquid path 200 is the switching pressure.

In an optional embodiment, the step of comparing the target pressure with the pre-stored switching pressure, and selectively controlling the first liquid path 200 or the second liquid path 300 to supply pressure to the liquid pressure output port according to the comparison result, includes:
supplying pressure by the first liquid path 200 if the target pressure value is greater than the switching pressure, and supplying pressure by the second liquid path 300 if the target pressure value is less than or equal to the switching pressure.

Both the first liquid path 200 and the second liquid path 300 can output the switching pressure. When the target pressure is equal to the switching pressure, the switching pressure can be output by the first liquid path 200 or by the second liquid path according to the specific application scenario. Specifically, when multiple pressure points need to be calibrated for the calibrated pressure instrument, if one of the pressure points is the switching pressure, the first liquid path 200 can be set to output the switching pressure when the subsequent pressure point is greater than the switching pressure; when the pressure point to be calibrated for the calibrated pressure instrument is the switching pressure, the second liquid path 300 outputs the switching pressure.

In an optional embodiment, the controller is configured to execute:
obtaining the current pressure of the liquid pressure output port; further, the step of supplying pressure by the first liquid path 200 if the target pressure value is greater than the switching pressure, and supplying pressure by the second liquid path 300 if the target pressure value is less than or equal to the switching pressure, includes:
switching the first liquid path 200 and the second liquid path 300 when the switching pressure is reached, and supplying pressure to the liquid pressure output port by the switched liquid path, if the switching pressure is between the current pressure and the target pressure; and supplying pressure to the liquid pressure output port by the current liquid path if the switching pressure is not between the current pressure and the target pressure.

The liquid pressure calibration apparatus according to the embodiment of the present invention may be provided with a pressure sensor at the liquid pressure output port for detecting the current pressure of the liquid pressure output port. The switching pressure may be pre-stored in the liquid pressure calibration apparatus.

The switching pressure is between the current pressure and the target pressure, that is, the current pressure is lower than the switching pressure and the switching pressure is lower than the target pressure, or the current pressure is higher than the switching pressure and the switching pressure is higher than the target pressure.

In an optional embodiment, the starting point of the pressure supply of the switched liquid path is the switching pressure. After the first liquid path 200 and the second liquid path 300 are switched at the switching pressure, the switched liquid path continues to supply pressure with the switching pressure as the starting point of the pressure supply. Specifically, if it is in the process of boosting pressure, the output pressure of the second liquid path 300 is increased to the switching pressure, the second liquid path 300 is switched to the first liquid path 200, and the first liquid path 200 continues to boost pressure with the switching pressure as the starting point; if it is in the process of reducing pressure, the output pressure of the first liquid path 200 is reduced to the switching pressure, the first liquid path 200 is switched to the second liquid path 300, and the second liquid path 300 continues to reduce pressure with the switching pressure as the starting point.

In an optional embodiment, the step of switching the first liquid path 200 and the second liquid path 300 when the switching pressure is reached, and supplying pressure to the liquid pressure output port by the switched liquid path, if the switching pressure is between the current pressure and the target pressure, includes:
reducing the pressure to the switching pressure by pressure supply of the first liquid path 200, and then switching to pressure supply of the second liquid path 300 to output the target pressure, if the current pressure is greater than the switching pressure; and increasing the pressure to the switching pressure by pressure supply of the second liquid path 300, and then switching to pressure supply of the first liquid path 200 to output the target pressure, if the current pressure is less than the switching pressure.

Specifically, if the current pressure is greater than the switching pressure, the current pressure supply liquid path is the first liquid path 200. After the pressure is reduced to the switching pressure by pressure supply of the first liquid path 200, it is switched to pressure supply by the second liquid path 300 to output the target pressure. The second liquid path 300 starts to reduce the pressure from the switching pressure until the target pressure is reached. If the current pressure is less than the switching pressure, the current pressure supply liquid path is the second liquid path 300. After the pressure is increased to the switching pressure by pressure supply of the second liquid path 300, it is switched to pressure supply by the first liquid path 200 to output the target pressure. The first liquid path 200 starts to increase the pressure from the switching pressure until the target pressure is reached.

In an optional embodiment, the pressure output range of the first liquid path 200 and the pressure output range of the second liquid path 300 are continuous at the switching pressure. That is, the point where the pressure output range of the first liquid path 200 and the pressure output range of the second liquid path 300 overlap is the switching pressure. Since the first liquid path 200 and the second liquid path 300 are switched at the switching pressure, the output liquid pressure is continuous when the first liquid path 200 and the second liquid path 300 are switched.

In an optional embodiment, the maximum output pressure in the pressure output range of the first liquid path 200 is greater than the maximum output pressure in the pressure output range of the second liquid path 300, and the minimum output pressure in the pressure output range of the first liquid path 200 is greater than the minimum output pressure in the pressure output range of the second liquid path 300. Specifically, the overlap point of the pressure output range of the first liquid path 200 and the pressure output range of the second liquid path 300 is located at the switching pressure, and except for the switching pressure, the pressure output range of the first liquid path 200 and the pressure output range of the second liquid path 300 do not overlap. The pressure output range of the first liquid path 200 and the pressure output range of the second liquid path 300 are continuous, so that the pressure range output by the liquid pressure calibration apparatus is wider and the maximum output pressure is higher, so that more pressure instruments with different ranges can be calibrated.

In an optional embodiment, a supercharger is provided on the first liquid path 200, and the supercharger includes a first compression chamber and a second compression chamber. The first compression chamber and the second compression chamber are configured such that the first compression chamber and the second compression chamber are filled with liquid medium, and when the pressure of the liquid medium in the first compression chamber changes by ΔP, the pressure of the liquid medium in the second compression chamber changes by N times ΔP, and N is greater than 1.

Those skilled in the art should understand that when N is greater than 1, the second compression chamber in the supercharger can achieve pressure boosting, and as N increases, the greater the liquid pressurization amplitude in the second compression chamber, the higher the maximum liquid pressure output. However, the greater the value of N, the greater the energy required to increase liquid pressure in the first compression chamber, and the higher the performance requirements for the pressure supply device of the first compression chamber (such as a liquid pressure pump). For example, in one example, 3≤N≤8, in another example, 5≤N≤12, and in yet another example, 10≤N≤15. It should be understood that the above-mentioned range of values of N is only exemplary. The range of values of N can be determined as needed, taking into account the maximum liquid pressure output requirements and the performance of the liquid pressure supply source (such as a liquid pressure pump) to determine an appropriate value.

In an optional embodiment, the liquid medium in the first compression chamber is isolated from the liquid medium in the second compression chamber. The first compression chamber is connected to the liquid pressure inlet port, and the second compression chamber is connected to the liquid pressure outlet port.

In an optional embodiment, the cross-sectional area of the first compression chamber is M times the cross-sectional area of the second compression chamber, and M is greater than 1. A first piston is disposed in the cavity body of the first compression chamber, and a second piston is disposed in the second compression chamber. The first piston is linked with the second piston to control the pressure of the liquid in the second compression chamber by controlling the position of the second piston.

Furthermore, in an optional embodiment, the first piston and the second piston move synchronously. The first piston in the first compression chamber moves to increase the volume of the first compression chamber, and a second piston is disposed in the second compression chamber to move synchronously with the movement of the first piston, so that the volume of the second compression chamber is reduced, thereby compressing the liquid in the second compression chamber.

The liquid in the first compression chamber is pressurized so that the liquid in the second compression chamber increases N times as the pressure of the liquid in the first compression chamber increases. Specifically, the liquid in the first compression chamber is pressurized, and the volume of the first compression chamber increases to push the first piston to move.

The contact area between the first piston and the liquid medium is M times the contact area between the second piston and the liquid medium, and M is equal to N. The method for determining M can refer to the method for determining N, which is not repeated here.

In an optional embodiment, when the first liquid path 200 supplies pressure to the liquid pressure output port, the first liquid path 200 is communicated with the second compression chamber, so that the first liquid path 200 outputs liquid to push the second piston to move to increase the volume of the second compression chamber.

Specifically, when the pressure is supplied by the second liquid path 300, the pressure of the liquid in the second compression chamber is equal to the pressure of the liquid in the first liquid path 200, so that when the pressure of the liquid in the second liquid path 300 is increased to the switching pressure and the second liquid path 300 is switched to the first liquid path 200, the first liquid path 200 starts to increase the pressure from the switching pressure. In addition, the first liquid path 200 is communicated with the second compression chamber, so that the first liquid path 200 output liquid during the pressurization process to push the second piston to move, which increases the volume of the second compression chamber, so that the volume of the second compression chamber is increased before switching to the first liquid path 200, which is convenient for compressing the liquid in the second compression chamber after switching to the first liquid path 200, and achieving a greater degree of pressurization. It should be understood that preferably, when the second liquid path 300 is switched with the first liquid path 200 or before the switching, the volume of the second compression chamber is maximum or close to maximum.

In an optional embodiment, the liquid pressure calibration apparatus further includes: an electrically driven liquid pressure source, the output end of the electrically driven liquid pressure source being connected to the liquid pressure inlet port; the first liquid path 200 and the second liquid path 300 share the electrically driven liquid pressure source, and at the same time the electrically driven liquid pressure source only provides a liquid pressure source for one of the first liquid path 200 and the second liquid path 300.

In this way, the first liquid path 200 and the second liquid path 300 share the electrically driven liquid pressure source, saving the internal space of the liquid pressure calibration apparatus occupied by the repeated configuration of the electrically driven liquid pressure source, and reducing the volume of the liquid pressure calibration apparatus.

In an optional embodiment, the liquid pressure output by the first liquid path 200 is greater than the liquid pressure output by the output end of the electrically driven liquid pressure source; and the liquid pressure output by the second liquid path 300 is less than or equal to the liquid pressure output by the output end of the electrically driven liquid pressure source.

Specifically, the second liquid path 300 is not provided with a boosting device, and the pressure liquid output by the electrically driven liquid pressure source is not pressurized during the process of supplying pressure to the liquid pressure output port via the second liquid path 300, that is, when the second liquid path 300 supplies pressure to the liquid pressure output port, the liquid pressure at the liquid pressure output port is slightly less than or equal to the liquid pressure output by the electrically driven liquid pressure source. The first liquid path 200 is provided with a boosting device, and the pressure liquid output by the electrically driven liquid pressure source is pressurized during the process of supplying pressure to the liquid pressure output port via the second liquid path 300, so that when the first liquid path 200 supplies pressure to the liquid pressure output port, the liquid pressure at the liquid pressure output port is greater than the liquid pressure output by the electrically driven liquid pressure source, thereby achieving double pressurization. The first liquid path 200 is provided with a supercharger to achieve the above-mentioned purpose of pressurization. For the specific structure and pressurization method of the supercharger, please refer to the above-mentioned related content, which will not be repeated here.

In an optional embodiment, the step of comparing the target pressure with the pre-stored switching pressure, and selectively controlling the first liquid path 200 or the second liquid path 300 to supply pressure to the liquid pressure output port based on the comparison result includes:
supplying pressure by the first liquid path 200 when the target pressure value is greater than the switching pressure; and
supplying pressure by the second liquid path 300 when the target pressure value is less than or equal to the switching pressure.

In an optional embodiment, the switching pressure is the pressure at which the first liquid path 200 and the second liquid path 300 are switched; and the step of supplying pressure by the first liquid path 200 when the target pressure value is greater than the switching pressure includes:
obtaining the current pressure of the liquid pressure output port;
increasing pressure to the switching pressure by the second liquid path 300 if the current pressure is lower than the switching pressure, and then switching pressure supply to the first liquid path 200 to output the target pressure; and
supplying pressure by the first liquid path 200 to output the target pressure if the current pressure is greater than or equal to the switching pressure.

In an optional embodiment, after switching pressure supply to the first liquid path 200 to output the target pressure, the first liquid path 200 continues to increase pressure from the pressure switching value to reach the target pressure.

In an optional embodiment, the switching pressure is the pressure at which the first liquid path 200 and the second liquid path 300 are switched; and
the step of supplying pressure by the second liquid path 300 when the target pressure value is less than or equal to the switching pressure includes:
obtaining the current pressure of the liquid pressure output port;
reducing the pressure to the switching pressure by pressure supply of the first liquid path 200 if the current pressure is greater than the switching pressure, and then switching pressure supply to the second liquid path 300 to output the target pressure; and
supplying pressure by the first liquid path 200 to output the target pressure if the current pressure is less than or equal to the switching pressure.

In an optional embodiment, after switching pressure supply to the second liquid path 300 to output the target pressure, the second liquid path 300 continues to reduce pressure from the pressure switching value to reach the target pressure.

The liquid pressure calibration apparatus provided in the present embodiment has a first liquid path 200 and a second liquid path 300 with different pressure output ranges arranged in parallel between the liquid pressure inlet port and the liquid pressure output port of the liquid pressure calibration apparatus. The pressure output range of the first liquid path 200 is continuous with the pressure output range of the second liquid path 300. The target pressure to be output is compared with the switching pressure, and the first liquid path 200 or the second liquid path 300 is selected as the liquid pressure output port to supply pressure and output the target pressure according to the comparison result, so that pressure is supplied based on two parallel liquid paths with different pressure ranges. The pressure supply liquid path is determined according to the output target pressure, so as to avoid the problem of a single liquid path providing a full range of liquid pressure and a large volume caused by a large piston cavity and a long lead screw. The liquid pressure can be output on demand within the limited volume of the liquid pressure calibration apparatus, thereby improving the portability of the liquid pressure calibration apparatus.

The liquid pressure control device according to the embodiment of the present invention can greatly reduce the weight and volume of the high-pressure liquid pressure calibration apparatus, and can better meet the requirements of the high-pressure liquid pressure control device in terms of lightweight and miniaturization, making the portability of high-pressure liquid pressure control device.

As shown in Figure 3, the liquid pressure calibration apparatus provided in this embodiment includes a hydraulic source part 100, which is configured to provide a liquid pressure source; a first liquid path 200, which is configured to supply a high-pressure liquid greater than or equal to the switching pressure; a second liquid path 300, which is configured to provide a low-pressure liquid less than or equal to the switching pressure; and a hydraulic lead-out part 400, which is configured to output the pressure liquid.

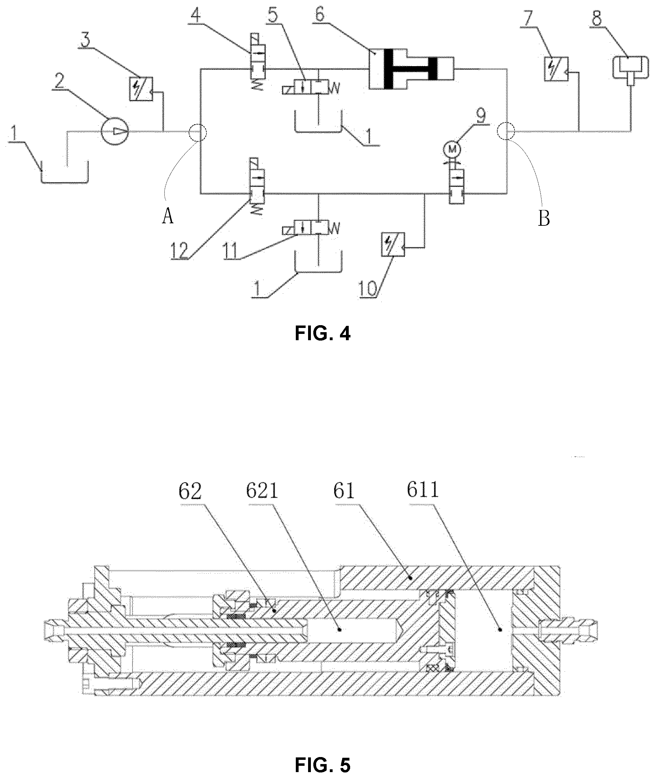

Specifically, as shown in Figure 4, the hydraulic source part 100 includes a liquid medium tank 1, an electrically driven liquid pressure source 2 and a pressure source sensor 3; the second liquid path 200 includes a servo valve 12, a servo valve 11, a liquid medium tank 1, a low pressure sensor 10 and an isolation valve 9; the first liquid path 300 includes a servo valve 4, a servo valve 5, a liquid medium tank 1 and a supercharger 6; and the hydraulic lead-out part 400 includes a pressure standard device 7 and a liquid pressure lead-out end 8.

As shown in Figure 4, the liquid medium in the liquid medium tank 1 is divided into two paths after passing through the electrically driven liquid pressure source 2 and the pressure source sensor 3, namely the first liquid path 200 and the second liquid path 300, wherein the first liquid path 200 passes through the servo valve 4, the servo valve 5, the liquid medium tank 1 and the supercharger 6; the second liquid path 300 passes through the servo valve 12, the servo valve 11, the liquid medium tank 1, the low pressure sensor 10 and the isolation valve 9, and then the two paths are merged and pass through the pressure standard device 7 and the liquid pressure lead-out end 8.

Specifically, the first liquid path 200 is provided with a control valve 4 and a control valve 5. The control valve 4 controls the on-off of the electrically driven liquid pressure source 2 and the first liquid path 200 (supercharger), thereby controlling the on-off of the electrically driven liquid pressure source 2 and the first liquid path 200. The control valve 5 controls the on-off of the first liquid path 200 and the liquid medium tank, thereby realizing the suction of liquid from the liquid medium tank 1 and the discharge of liquid to the liquid medium tank 1. The control valve and the control valve are arranged between the electrically driven liquid pressure source 2 and the supercharger 6 on the first liquid path 200. The control valve 5 is arranged between the control valve 4 and the supercharger 6.

During the pressurization process of the first liquid path 200, the control valve 4 opens the pressure liquid output by the electrically driven liquid pressure source 2 and inputs it into the first compression chamber of the supercharger 6, so that the volume of the first compression chamber expands and compresses the liquid in the second compression chamber to pressurize the liquid in the second compression chamber.

During the pressure reduction process of the first liquid path 200, the control valve 5 is opened, and the liquid in the first compression chamber is discharged to the liquid medium tank 1 through the control valve 5.

The second liquid path 300 is provided with a servo valve 12, a servo valve 11, and an isolation valve 9. The servo valve 12 controls the on-off of the electrically driven liquid pressure source 2 and the second liquid path 300; the servo valve 11 controls the on-off of the second liquid path 300 and the liquid medium tank, so as to realize the suction of liquid from the liquid medium tank and the discharge of liquid to the liquid medium tank; the isolation valve 9 controls the on-off of the second liquid path 300 and the liquid pressure output port. The servo valve 11 is provided between the servo valve 12 and the isolation valve 9, and the servo valve 12 is close to the side of the electrically driven liquid pressure source 2. During the pressurization process of the second liquid path 300, the servo valve 12 and the isolation valve 9 are opened, and the pressurized liquid output by the electrically driven liquid pressure source 2 is supplied to the liquid pressure output port. During the pressure reduction process of the second liquid path 300, the servo valve 11 and the isolation valve 9 are opened, and the liquid in the second liquid path 300 is discharged to the liquid medium tank through the servo valve 11. The servo valve 12 is a solenoid valve, the servo valve 11 is a solenoid valve, and the isolation valve 9 is an electric isolation valve.

Based on the liquid pressure calibration apparatus shown in FIG. 4, a liquid pressure control method for the liquid pressure calibration apparatus will be described below.

When the target pressure to be output is within the pressure output range of the second liquid path 300, the pressure control method of the second liquid path 300 is as follows:
The electrically driven liquid pressure source 2 works, the pressure source sensor 3 measures the pressure value at the output end of the electrically driven liquid pressure source 2, the servo valve 4 is closed, the servo valve 5 is opened, the isolation valve 9 is opened, the first liquid path 200 is closed, and the pressure is supplied by the second liquid path 300. During the pressure supply of the second liquid path 300, the servo valve 12 and the servo valve 11 cooperate with each other to start the pressure control action according to the measurement value of the pressure standard device 7. When the measurement value of the pressure standard device 7 is lower than the target pressure value, the opening of the servo valve 12 increases, while the opening of the servo valve 11 decreases, and the pressure at the liquid pressure lead-out end 8 gradually increases to approach the target pressure; when the measurement value returned by the pressure standard device 7 is higher than the target pressure value, the opening of the servo valve 12 decreases, while the opening of the servo valve 11 increases, and the pressure at the liquid pressure lead-out end 8 gradually decreases to approach the target pressure. The target pressure is the pressure that the liquid pressure calibration apparatus needs to output to the liquid pressure lead-out end 8. Usually, the target pressure is input by the user or determined according to the pressure instrument to be calibrated.

When the target pressure to be output is within the pressure output range of the first liquid path 200, the pressure control method of the first liquid path 200 is as follows:

The servo valve 12 is closed, the isolation valve 9 is closed, the servo valve 4 is opened and the servo valve 5 is opened through the supercharger 6, and the pressure control action is started in coordination with the measured value of the pressure standard device 7. When the measured value of the pressure standard device 7 is lower than the target pressure value, the opening of the servo valve 4 increases, while the opening of the servo valve 5 decreases, and the liquid pressure at the liquid pressure lead-out end 8 gradually increases to approach the target pressure. When the measured value returned by the pressure standard device 7 is higher than the target pressure value, the opening of the servo valve 4 decreases, while the opening of the servo valve 5 increases, and the liquid pressure at the liquid pressure lead-out end 8 gradually decreases to approach the target pressure.

The above describes a method for controlling the pressure and outputting the target pressure value when the target pressure is within the pressure output range of the first liquid path 200 and the target pressure is within the pressure output range of the second liquid path 300.

The following takes a typical application scenario as an example. The scenario is divided into a pressurization process and a pressure reduction process. The pressurization process and the pressure reduction process span the switching value, and the pressurization process and the pressure reduction process are implemented by the cooperation of the first liquid path 200 and the second liquid path 300. Multiple pressure calibration points are set for the pressurization process and the pressure reduction process.

The following introduces a method for achieving pressurization by the cooperation of the first liquid path 200 and the second liquid path 300. This pressurization method is usually used in application scenarios where multiple pressure points need to be calibrated for the pressure instrument being calibrated, and some of the multiple pressure points are located within the pressure output range of the second liquid path 300 and some are located within the pressure output range of the first liquid path 200.

The pressure control process of the second liquid path 300 (low pressure section of upward stroke (pressure increase)) during the pressurization process is as follows:
The electrically driven liquid pressure source 2 works, the pressure source sensor 3 measures the pressure value at the output end of the electrically driven liquid pressure source 2, the servo valve 4 is closed, the servo valve 5 is opened, the isolation valve 9 is opened, the first liquid path 200 is closed, and the pressure is supplied by the second liquid path 300. During the pressurization process of the second liquid path 300, the servo valve 12 and the servo valve 11 cooperate with each other according to the measured value of the pressure standard device 7 to start the pressure control action, the opening of the servo valve 12 increases, while the opening of the servo valve 11 decreases, the system will gradually increase the output liquid pressure from low to high until it reaches the pressure switching value, completing the pressure control of the second liquid path 300 (low pressure section of upward stroke (pressure increase)). If the connected pressure instrument to be calibrated during the pressure supply process of the second liquid path 300 has a pressure point that needs to be calibrated, when the pressure point is reached, the second liquid path 300 controls the liquid pressure output so that the liquid pressure lead-out end 8 stabilizes at the pressure point. When the pressure point calibration is completed, the second liquid path 300 continues to increase the pressure, and the pressure control of each pressure point within the pressure supply range of the second liquid path 300 is completed according to this control method, until the pressure switching value is reached.

The pressure control process of the first liquid path 200 (high pressure section of upward stroke (pressure increase)) during the pressurization process is as follows:
When the pressure of the liquid pressure lead-out end 8 reaches the pressure switching value, it switches from the second low liquid path 300 to the first liquid path 200, and the first liquid path 200 continues to increase pressure. After switching to the first liquid path 200, the supercharger 6 starts.

Specifically, after pressure supply by the second liquid path 300 reaches the switching pressure, the isolation valve 9 is closed, the servo valve 4 is opened, and the pressure supply of the second liquid path 300 is switched to the pressure supply of the first liquid path 200. During the pressure control process of the first liquid path 200 (high pressure section of upward stroke (pressure increase)), the servo valve 4 and the servo valve 5 start the pressure control action through the supercharger 6 according to the measured value of the pressure standard device 7. The opening of the servo valve 4 increases, while the opening of the servo valve 5 decreases, and the output liquid pressure gradually increases, completing the pressure control of the first liquid path 200 (high pressure section of upward stroke (pressure increase)). If the connected pressure instrument to be calibrated during the pressure supply process of the first liquid path 200 has a pressure point that needs to be calibrated, then when the pressure point is reached according to the above control method, the first liquid path 200 controls the liquid pressure output so that the liquid pressure lead-out end 8 stabilizes at the pressure point. After the pressure point calibration is completed, the first liquid path 200 continues to increase the pressure, and the pressure control of each pressure point within the pressure supply range of the first liquid path 200 is completed according to this control method, until the maximum output pressure of the first liquid path 200 is reached.

The above describes the implementation method of increasing pressure during the pressurization process, where the second liquid path 300 is in cooperation with the first liquid path 200, and it is switched from the second liquid path 300 to the first liquid path 200. The following describes the implementation method of reducing the pressure during the pressure reduction process, where the second liquid path 300 is in cooperation with the first liquid path 200, and it is switched from the first liquid path 200 to the second liquid path 300.

During the pressure reduction process, the pressure control process of the first liquid path 200 (high pressure section of downward stroke (pressure reduction)) is as follows: the servo valve 4 and the servo valve 5 start the pressure control action by cooperating with each other through the supercharger 6 according to the measured value of the pressure standard device 7, the opening of the servo valve 4 decreases, while the opening of the servo valve 5 increases, and the pressure gradually decreases from high to low until the switching value is reached. After reaching the switching value, the isolation valve 9 opens, the servo valve 4 closes, and the first liquid path is switched to the second liquid path 300.

During the pressure reduction process, the pressure control process of the second liquid path 300 (low-pressure section of the downward stroke (pressure reduction)) is as follows: the servo valve 12 and the servo valve 11 cooperate with each other to start the pressure control action according to the measurement value of the pressure standard device 7, the opening of the servo valve 12 decreases, while the opening of the servo valve 11 increases, and the system will gradually reduce pressure and approach the target pressure from high to low, completing the pressure control of the remaining pressure points in the downward stroke (low-pressure section) , until the pressure reaches the lower pressure limit of the second liquid path 300.

The structure of a supercharger 6 provided by an embodiment of the present invention is shown in FIG. 5. The supercharger 6 comprises a low-pressure cylinder 61 and a high-pressure cylinder 62. A first compression chamber 611 is provided in the low-pressure cylinder 61, and a second compression chamber 621 is provided in the high-pressure cylinder. The first compression chamber 611 and the second compression chamber 621 are configured such that the volume of the first compression chamber 611 increases when the first compression chamber 611 is filled with liquid, the volume of the second compression chamber 621 decreases as the volume of the first compression chamber 611 increases, and the liquid in the second compression chamber 621 is compressed to achieve pressurization.

Furthermore, in order to allow the pistons in the high-pressure cylinder 62 and the low-pressure cylinder 61 to slide flexibly, the embodiment of the present invention can also set the high-pressure cylinder 62 to be rotatable, and when the high-pressure cylinder 62 rotates, the second piston in the second compression chamber 621 rotates, and the first piston in the first compression chamber 611 rotates synchronously with the second piston.

The above embodiment illustrates the implementation method of calibrating multiple inspection points across the switching value and the pressure control implementation method when the target pressure is within the pressure output range of the first liquid path 200 or the pressure output range of the second liquid path 300. Those skilled in the art should understand that when the target pressure is within the pressure output range of the second liquid path 300, the pressure is only supplied through the first liquid path 200. When the target pressure is within the pressure output range of the first liquid path 200, if the current pressure value is within the pressure output range of the second liquid path 300, it is necessary to pressurize to the switching pressure through the second liquid path 300. After reaching the switching pressure, it is switched to the first liquid path 200, and the pressure is supplied by the first liquid path 200.

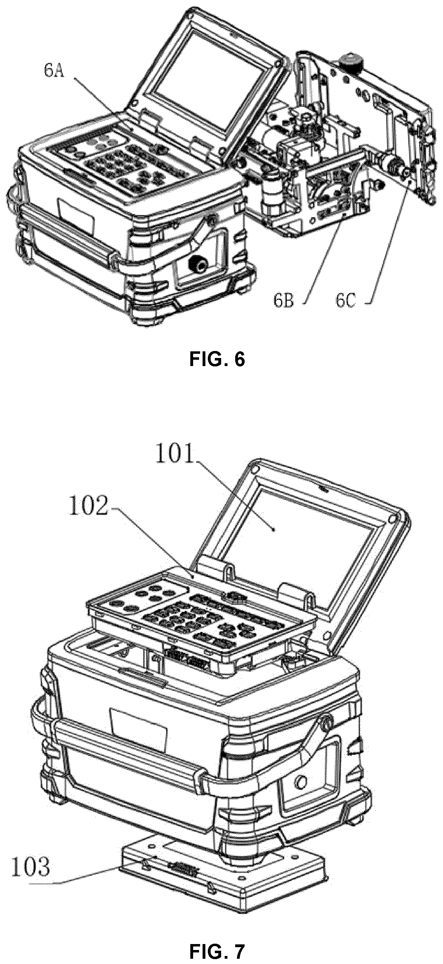

FIG. 6 is a structural diagram of a liquid pressure calibration apparatus provided by an embodiment of the present invention. The liquid pressure calibration apparatus shown in FIG. 6 includes a front housing component 6A, an internal component 6B, and a rear housing component 6C. The liquid pressure calibration apparatus provided in the above embodiment of FIG. 2, FIG. 3, and FIG. 4 can be constructed using the structure described in FIG. 6. For example, the liquid pressure calibration apparatus provided in FIG. 2, FIG. 3, and FIG. 4 can be integrated into the internal component 6B in FIG. 6, so that 6A, 6B, and 6C are assembled into one to construct a portable liquid pressure calibrator. Further, as shown in FIG. 7, a display screen 101 and an electrical signal output measurement component 102 are provided on the upper part of the front housing component 6A; and a battery 103 is provided on the lower part of the housing component. According to different application scenarios, the display screen 101 can display parameters such as the liquid pressure value and the measured value of the pressure instrument to be calibrated, and an input box can be further provided to receive the target pressure value input by the user. The electrical signal output measurement component 102 can be connected to the instrument to be calibrated to measure the electrical signal output by the instrument to be calibrated to determine its measured value. The battery 103 supplies power to the entire device.

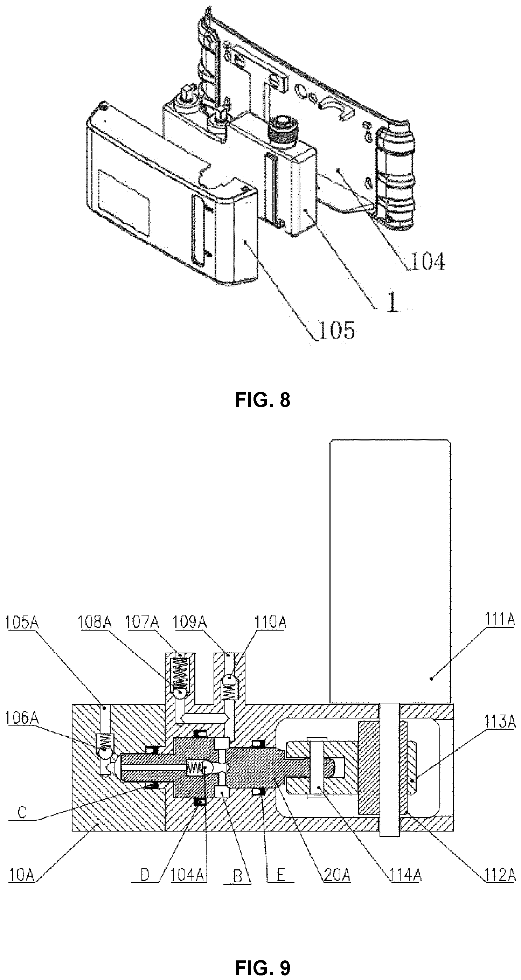

In an optional embodiment, as shown in Fig. 6 and Fig. 8, the rear housing assembly 6C of the liquid pressure calibrator comprises a housing cover 104, a liquid storage tank 1 and a liquid tank cover 105. As shown in Fig. 8, the liquid storage tank 1 is attached to the housing cover 104, and the liquid storage tank 1 is clamped between the liquid tank cover 105 and the liquid tank cover 105.

The liquid pressure control method for a liquid pressure calibration apparatus provided in the embodiment of the present invention can be executed by a control module, for example, a controller, provided in the liquid pressure calibration apparatus. The method includes the following steps:
91. determining the target pressure that needs to be output;
92. comparing whether the target pressure value is greater than the pre-stored switching pressure;
93. supplying pressure by the first liquid path if the target pressure value is greater than the pre-stored switching pressure.

Specifically, the current pressure of the liquid pressure output port is obtained. If the current pressure is greater than the switching pressure, the first liquid path is the current pressure supply liquid path and continues to supply the pressure; if the current pressure is less than or equal to the switching pressure, the second liquid path is the current pressure supply liquid path, and the pressure of the liquid pressure output port needs to be increased to the switching value through the second liquid path and then pressure supply is switched to the first liquid path.

94. If the target pressure value is less than or equal to the pre-stored switching pressure, the second liquid path supplies pressure.

Specifically, the current pressure of the liquid pressure output port is obtained. If the current pressure is greater than the switching pressure, the first liquid path is the current pressure supply liquid path, and the pressure of the liquid pressure output port needs to be reduced to the switching value through the first liquid path and then pressure supply is switched to the second liquid path; if the current pressure is less than or equal to the switching pressure, the second liquid path is the current pressure supply liquid path and continues to supply pressure.

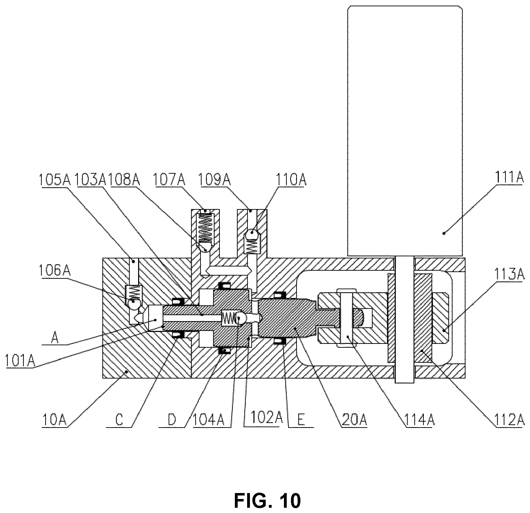

As shown in FIG. 9 and FIG. 10, an embodiment of the present invention provides an electrically driven liquid pressure source 2, comprising:
A cylinder body 10A, which is provided with a cavity; and a piston rod 20A, which is at least partially disposed in the cavity. The portion of the piston rod 20A disposed in the cavity has a first end 101 and a second end 102. As shown in FIG. 10, the first end 101A forms a first compression chamber (high-pressure cylinder) A with a variable volume. As shown in FIG. 9, the second end 102A forms a second compression chamber (low-pressure cylinder) B with a variable volume. The maximum volume of the first compression chamber A is smaller than the maximum volume of the second compression chamber B. The portion of the piston rod 20A disposed in the cavity is sealed with the inner wall of the cavity. Specifically, as shown in FIG. 9 and FIG. 10, a sealing ring C and a sealing ring D are provided between the first compression chamber (low-pressure cylinder) A and the second compression chamber (low-pressure cylinder) B; and a sealing ring E is provided between the second compression chamber (low-pressure cylinder) B and the outside.

The piston rod 20A reciprocates between the first position and the second position in the cavity, wherein FIG. 9 shows that the piston rod 20A is located at the first position, and FIG. 10 shows that the piston rod 20A is located at the second position. During the movement of the piston rod from the first position to the second position, the second compression chamber (low-pressure cylinder) B is compressed, and the second compression chamber (low-pressure cylinder) B is in fluid communication with the first compression chamber (high-pressure cylinder). During the movement of the piston rod from the second position to the first position, the first compression chamber (high-pressure cylinder) A is compressed, and the second compression chamber (low-pressure cylinder) B is fluidly blocked from the first compression chamber (high-pressure cylinder). In a possible implementation, as shown in FIG. 9 and FIG. 10, the cavity is a continuous cavity, that is, the cavity is an integrated cavity without interruption in the middle. The first compression chamber A and the second compression chamber B are both arranged in the cavity. In a possible implementation, as shown in FIG. 9 and FIG. 10, the second end is arranged in the middle of the piston rod 20A. In a possible implementation, as shown in FIG. 9 and FIG. 10, the second compression chamber B is annular. Specifically, the second compression chamber B is an annular chamber surrounding the axial direction of the piston rod 20A.

In a possible implementation, as shown in FIG. 9 and FIG. 10, a connecting liquid path 103 is provided between the first compression chamber (high-pressure cylinder) A and the second compression chamber (low-pressure cylinder) B, and a first one-way valve 104A is provided on the connecting liquid path, and the first one-way valve 104A controls the on-off of the connecting liquid path. The first one-way valve 104A is configured to open the connecting pipeline 103A when the liquid in the second compression chamber (low-pressure cylinder) B flows to the first compression chamber (high-pressure cylinder) A. Specifically, the first one-way valve 104A is provided in the connecting pipeline 103A, blocking the liquid in the first compression chamber (low-pressure cylinder) A from flowing to the second compression chamber (high-pressure cylinder) B, while not blocking the liquid in the second compression chamber (low-pressure cylinder) B from flowing to the first compression chamber (high-pressure cylinder) A. Thus, the liquid in the second compression chamber (low-pressure cylinder) B can flow to the first compression chamber (high-pressure cylinder) A in one direction.

In a possible implementation, the connecting liquid path 103A and the first one-way valve 104A are disposed in the piston rod 20A. Compared with the connecting liquid path 103A and the first one-way valve 104A being disposed outside the cylinder body 10A, the connecting liquid path 103A and the first one-way valve 104A being disposed in the piston rod 20A can reduce the volume of the electrically driven liquid pressure source 2, making it easier to achieve miniaturization.

In a possible implementation, when the piston rod 20A moves from the second position to the first position, the first compression chamber (high-pressure cylinder) A is compressed, the liquid pressure in the first compression chamber (high-pressure cylinder) A increases, and the first compression chamber (high-pressure cylinder) A outputs pressurized liquid. At the same time, the volume of the second compression chamber (low-pressure cylinder) B increases, and the second compression chamber (low-pressure cylinder) B is replenished with liquid, that is, liquid is inhaled.

In a possible implementation, when the piston rod 20A compresses the second compression chamber (low-pressure cylinder) B during the movement from the first position to the second position, the liquid in the second compression chamber (low-pressure cylinder) B replenishes the first compression chamber (high-pressure cylinder) A.

In a possible implementation, the cylinder body 10A is provided with an output pipeline 105A, and the output pipeline 105A is connected to the first compression chamber (high-pressure cylinder) A. A second one-way valve 106A is provided on the output pipeline 105A, and the second one-way valve 106A controls the on-off of the output pipeline 105A. The second one-way valve 106A is configured to open the output pipeline 105A when the first compression chamber (high-pressure cylinder) A outputs pressure liquid.

Specifically, the second one-way valve 106A is disposed in the output pipeline 105A to block the liquid in the output pipeline 105A from flowing to the first compression chamber (high-pressure cylinder) A, but does not block the pressurized liquid in the first compression chamber (high-pressure cylinder) A from flowing to the output pipeline 105A. Thus, the liquid in the first compression chamber (low-pressure cylinder) A can flow to the output pipeline 105A in one direction.

In a possible implementation, the cylinder body 20A is provided with an overflow liquid path 107A, and an overflow valve 108A is provided on the overflow liquid path. The overflow valve 108A controls the on-off of the overflow liquid path 107A, and the overflow liquid path 107A is connected to the second compression chamber (low-pressure cylinder) B. The overflow valve 108A is configured such that when the liquid pressure in the second compression chamber (low-pressure cylinder) B is greater than the set pressure, the overflow valve 108A is opened, and the liquid in the second compression chamber (low-pressure cylinder) B is discharged through the overflow liquid path to relieve the pressure of the second compression chamber (low-pressure cylinder) B. Specifically, the set pressure is determined according to the overflow valve 108A, and different specifications and models of the overflow valve 108A may have different pressure relief thresholds. In specific implementation, adaptation and selection may be performed according to different requirements.

In a possible implementation, the cylinder body 10 is provided with a liquid suction path 109A communicated with the second compression chamber (low-pressure cylinder) B. A third one-way valve 110A is provided on the liquid suction path 109A, and the third one-way valve 110A controls the on-off of the liquid suction path 109A. The third one-way valve 110A is configured to open the liquid suction path 109A when liquid is replenished to the second compression chamber (low-pressure cylinder) A through the liquid suction path 109A. Specifically, the third one-way valve 110A is provided in the liquid suction path 109A, blocking the liquid in the second compression chamber (low-pressure cylinder) B from flowing to the liquid suction path 109A, while not blocking the pressurized liquid in the liquid suction path 109A from flowing to the second compression chamber (low-pressure cylinder) B. Thus, the liquid in the liquid suction path 109A can flow to the output pipeline 105A in one direction.

In a possible implementation, as shown in FIG. 9 and FIG. 10, the electrically driven liquid pressure source 2 further includes a transmission assembly.

The piston rod 20A is connected to the transmission assembly, and the transmission assembly provides reciprocating power to the piston rod, so that the piston rod 20A reciprocates between a first position and a second position in the cavity.

In a possible implementation, the transmission assembly includes: a motor 111A, an eccentric shaft 112A, and a rocker arm 113A, wherein the rotary shaft of the motor is connected to the eccentric shaft 112A, the eccentric shaft 112A is connected to the rocker arm 113A, and the rocker arm 113A is connected to the piston rod 20A via a pin 114A.

The embodiment of the present invention provides a portable liquid calibration apparatus, comprising the electrically driven liquid pressure source 2 as described above.

The working mode of the electrically driven liquid pressure source 2 of the embodiment of the present invention is described below. As shown in FIG. 9 and FIG. 10, the electrically driven liquid pressure source 2 comprises: a motor 111A, an eccentric shaft 112A, a rocker arm 113A,

The eccentric shaft 112A rotates under the drive of the motor 111A, and the eccentric shaft 112A drives one end of the rocker arm 113A to swing, and the other end of the rocker arm 113A drives the piston rod 20A to reciprocate left and right.

When the electrically driven liquid pressure source 2 works for the first time, the first compression chamber (high-pressure cylinder) A and the second compression chamber (low-pressure cylinder) B inhale liquid, and the implementation process is as follows:

As shown in Figure 9, the piston rod 20A moves to the left, the liquid inside the first compression chamber (high-pressure cylinder) A is compressed, and the second compression chamber (low-pressure cylinder) B forms a negative pressure, and the external liquid is sucked into the second compression chamber (low-pressure cylinder) B through the liquid suction path 109A. The liquid suction and the compression of the first compression chamber (high-pressure cylinder) A are completed synchronously.

The process of compression of the second compression chamber (low-pressure cylinder) B is as follows:
The piston rod 20A moves to the right, and the liquid in the second compression chamber (low-pressure cylinder) B is compressed and flows into the first compression chamber (high-pressure cylinder) A through the connecting liquid path 103A. When the pressure output by the output pipeline 105A is less than the opening threshold of the overflow valve 108A, the liquid in the second compression chamber (low-pressure cylinder) B continues to flow into the first compression chamber (high-pressure cylinder) A, and the pressure liquid in the first compression chamber (high-pressure cylinder) A flows out through the second one-way valve 106A and the output pipeline 105A to provide a liquid pressure source for subsequent components. When the pressure of the output pipeline 105A is greater than the opening threshold of the overflow valve 108A, the liquid in the second compression chamber (low-pressure cylinder) B fills the first compression chamber (high-pressure cylinder) A, and the excess liquid is discharged through the overflow valve 108A and the overflow liquid path 107A.

The process of compression of the first compression chamber (high-pressure cylinder) A is as follows:
The piston rod 20A moves to the left, and after the liquid in the first compression chamber (high-pressure cylinder) A is compressed, it is discharged through the second one-way valve 106A through the output pipeline 105A, flows out of the output one-way valve 12A and flows into the high-pressure output port 13A, and the compression process of the first compression chamber (high-pressure cylinder) A and the liquid absorption process of the second compression chamber (low-pressure cylinder) B are completed synchronously. The liquid absorption process of the second compression chamber (low-pressure cylinder) B is carried out synchronously with the compression process of the first compression chamber (high-pressure cylinder) A, so that the liquid can be sucked from the liquid suction path 109A, and the required pressure is output through the output pipeline 105A after continuous compression and pressurization.

The electrically driven liquid pressure source of the embodiment of the present invention is provided with a first compression chamber and a second compression chamber, wherein the first compression chamber and the second compression chamber are on the same axis, and the compression directions of the first compression chamber and the second compression chamber are opposite, thereby improving the compression efficiency. A pipeline and a one-way valve are arranged inside the piston rod, and the first compression chamber and the second compression chamber of the liquid are connected through the pipeline in the piston rod to reduce pressure loss and improve the pressurization efficiency. The liquid enters the intermediate part and flows to the high-pressure end. The electrically driven liquid pressure source of the embodiment of the present invention has self-priming ability. Before the liquid pressure is established, the pipeline is filled with air. The hydraulic pump can empty the air in the pipeline with excellent self-priming ability, so that the liquid is continuously sucked into the liquid suction port without filling the liquid. The electrically driven liquid pressure source of the embodiment of the present invention has a variable flow function. With the first compression chamber with overflow function, it has a large flow characteristic in the low pressure delivery stage and a small flow characteristic in the high pressure delivery stage. The first compression chamber and the second compression chamber work in series, and the second compression chamber is used for compression in the low pressure stage, and the smaller first compression chamber is used for compression in the high pressure stage, so as to avoid the power consumption increasing sharply with the increase of pressure, thereby saving power consumption. The electrically driven liquid pressure source of the embodiment of the present invention uses an automatic compensation seal mode internally, and does not rely on the viscosity of the medium to maintain the seal. The electrically driven liquid pressure source of the embodiment of the present invention can be used in a portable liquid pressure calibration apparatus to provide a hydraulic source for the portable liquid pressure calibration apparatus, so that the weight and volume of the portable liquid pressure calibration apparatus can be better controlled, and it is more convenient to use the portable liquid pressure calibration apparatus to realize the on-site calibration of high-pressure liquid pressure instruments. The liquid pressure calibration apparatus provided by the embodiment of the present invention has a first liquid path 200 and a second liquid path 300 with different pressure output ranges arranged in parallel between the liquid pressure inlet port and the liquid pressure output port of the liquid pressure calibration apparatus. The pressure output range of the first liquid path 200 is continuous with the pressure output range of the second liquid path 300. The target pressure to be output is compared with the switching pressure, and the first liquid path 200 or the second liquid path 300 is selected to output target pressure to the liquid pressure output port according to the comparison result, so that the pressure is supplied based on the two parallel liquid paths with different pressure ranges. The pressure supply liquid path is determined according to the output target pressure, so as to avoid the problem of a single liquid path providing a full range of liquid pressure and a large volume caused by a large piston cavity and a long lead screw. The liquid pressure can be output on demand within the limited volume of the liquid pressure calibration apparatus, thereby improving the portability of the liquid pressure calibration apparatus. According to the liquid pressure control device involved in the present invention, the high-pressure liquid pressure calibration apparatus can be constructed to be portable, and a battery is provided for power supply, which can meet the requirements of on-site pressure verification and calibration work.

## Claims

1. A liquid pressure calibration apparatus, comprising:
a liquid pressure inlet port for introducing pressurized liquid;
a liquid pressure output port for outputting pressurized liquid;
a first liquid path having an input end and an output end, wherein the input end of the first liquid path is connected to the liquid pressure inlet port, and the output end of the first liquid path is connected to the liquid pressure outlet port;
a second liquid path having an input end and an output end and arranged in parallel with the first liquid path, wherein the input end of the second liquid path is connected to the liquid pressure inlet port, and the output end of the second liquid path is connected to the liquid pressure outlet port;
a controller, configured to perform:
determining a target pressure that the apparatus needs to output; and
comparing the target pressure with a pre-stored switching pressure, and selectively controlling the first liquid path or the second liquid path to supply pressure to the liquid pressure output port based on a comparison result; wherein a pressure output range of the first liquid path is continuous with a pressure output range of the second liquid path.

2. The apparatus according to claim 1, wherein the step of comparing the target pressure with the pre-stored switching pressure and selectively controlling the first liquid path or the second liquid path to supply pressure to the liquid pressure output port based on the comparison result comprises:
supplying pressure by the first liquid path if the target pressure value is greater than the switching pressure; and supplying pressure by the second liquid path if the target pressure value is less than or equal to the switching pressure.

3. The apparatus according to claim 2, wherein the controller is configured to execute:
obtaining a current pressure of the liquid pressure output port;
wherein the step of supplying pressure by the first liquid path if the target pressure value is greater than the switching pressure, and supplying pressure by the second liquid path if the target pressure value is less than or equal to the switching pressure, comprises:
switching the first liquid path and the second liquid path are switched when the switching pressure is reached, if the switching pressure is between the current pressure and the target pressure, and supplying pressure to the liquid pressure output port by the switched liquid path; and
supplying pressure to the fluid pressure output port by the current liquid path, if the switching pressure is not between the current pressure and the target pressure.

4. The apparatus according to claim 3, wherein a pressure supply starting point of the switched liquid path is the switching pressure.

5. The apparatus according to claim 3 or 4, wherein the step of switching the first liquid path and the second liquid path when the switching pressure is reached, if the switching pressure is between the current pressure and the target pressure, and supplying pressure to the liquid pressure output port by the switched liquid path, comprises:
reducing the pressure to the switching pressure by pressure supply of the first liquid path, if the current pressure is greater than the switching pressure, and then outputting the target pressure by pressure supply of the second liquid path; and
increasing the pressure to the switching pressure by pressure supply of the second liquid path, if the current pressure is lower than the switching pressure, and then outputting the target pressure by pressure supply of the first liquid path.

6. The apparatus according to any one of claims 1 to 4, wherein a pressure output range of the first liquid path and a pressure output range of the second liquid path are continuous at the switching pressure.

7. The apparatus according to any one of claims 1 to 4, wherein a maximum output pressure in the pressure output range of the first liquid path is greater than a maximum output pressure in the pressure output range of the second liquid path, and a minimum output pressure in the pressure output range of the first liquid path is greater than a minimum output pressure in the pressure output range of the second liquid path.

8. The apparatus according to any one of claims 1 to 4, wherein a supercharger is provided on the first liquid path, and the supercharger comprises a first compression chamber and a second compression chamber, and wherein the first compression chamber and the second compression chamber are configured such that the first compression chamber and the second compression chamber are filled with liquid medium, and when the pressure of the liquid medium in the first compression chamber changes by ΔP, the pressure of the liquid medium in the second compression chamber changes by N times ΔP, where N is greater than 1.

9. The apparatus according to claim 8, wherein the liquid medium in the first compression chamber is isolated from the liquid medium in the second compression chamber, the first compression chamber is connected to the liquid pressure inlet port, and the second compression chamber is connected to the liquid pressure outlet port.

10. The apparatus according to claim 8 or 9, wherein the cross-sectional area of the first compression chamber is M times the cross-sectional area of the second compression chamber, where M is greater than 1;
a first piston is disposed in the first compression chamber; and
a second piston is disposed in the second compression chamber, wherein the first piston is linked with the second piston, and the pressure of the liquid in the second compression chamber is controlled by controlling the position of the second piston.

11. The apparatus according to claim 10, wherein the first piston and the second piston move synchronously, the first piston in the first compression chamber moves to increase the volume of the first compression chamber, and the second piston disposed in the second compression chamber moves synchronously with the movement of the first piston, so that the volume of the second compression chamber is reduced, thereby compressing and pressurizing the liquid in the second compression chamber.

12. The apparatus according to claim 10 or 11, wherein when the second liquid path supplies pressure to the liquid pressure output port, the second liquid path is communicated with the second compression chamber, so that the second liquid path outputs liquid to push the second piston to move to increase the volume of the second compression chamber.

13. The apparatus according to claim 10 or 11, wherein M is equal to N.

14. The apparatus according to any one of claims 1 to 4, wherein the apparatus further comprises an electrically driven liquid pressure source, and an output end of the electrically driven liquid pressure source is connected to the liquid pressure inlet port; and
the first liquid path and the second liquid path share the electrically driven liquid pressure source, and the electrically driven liquid pressure source only provides a liquid pressure source for one of the first liquid path and the second liquid path in a same moment.

15. The apparatus according to claim 14, wherein the liquid pressure output by the first liquid path is greater than the liquid pressure output by the output end of the electrically driven liquid pressure source; and
the liquid pressure output by the second liquid path is less than or equal to the liquid pressure output by the output end of the electrically driven liquid pressure source.
